# EUROPEAN PATENT SPECIFICATION

(11) **EP 1 188 167 B1**
(45) Date of publication and mention of the grant of the patent: **30.11.2005**
(21) Application number: 00964890.8
(22) Date of filing: 02.06.2000
(51) Int. Cl.: H01B 12/06

(54) **METHODS FOR JOINING HIGH TEMPERATURE SUPERCONDUCTING COMPONENTS IN A SUPERCONDUCTING CABLE WITH NEGLIGIBLE CRITICAL CURRENT DEGRADATION AND ARTICLES OF MANUFACTURE IN ACCORDANCE THEREWITH**
VERFAHREN ZUM VERBINDEN VON HOCHTEMPERATURSUPRALEITENDEN KOMPONENTEN IN EINEM SUPRALEITENDEN KABEL MIT UNBEDEUTENDER KRITISCHER STROM DEGRADATION UND AUF DIESE WEISE HERGESTELLTE ARTIKEL
PROCEDES PERMETTANT D'ASSEMBLER DES COMPOSANTS SUPRACONDUCTEURS HAUTE TEMPERATURE DANS UN CABLE SUPRACONDUCTEUR AVEC UNE DEGRADATION DE COURANT CRITIQUE NEGLIGEABLE ET ARTICLES FABRIQUES SELON CES PROCEDES

(30) Priority: 02.06.1999 US 324144
(43) Date of publication of application: 20.03.2002
(73) Proprietor: Pirelli & C. S.p.A., 20123 Milano (IT)
(72) Inventor: SPREAFICO, Sergio, I-22036 Erba (CO) (IT); GHERARDI, Laura, I-20052 Monza (IT); BUZCEK, David, M., Dover, MA 02030 (US); SCUDIERE, John, D., Bolton, MA 01740 (US); HARNOIS, Richard, E., Wrentham, MA 02093 (US)
(74) Representative: Riccardi, Elisa
(86) International application number: PCT/US2000/015382
(87) International publication number: WO 2000/077797

(56) References cited:
- EP-A- 0 786 783
- US-A- 3 864 508
- US-A- 5 321 003

## Description

### TECHNICAL FIELD

The present invention generally relates to methods for joining high temperature superconducting components. The invention more particularly relates to joining high temperature superconducting components of cables having predetermined splice geometries such that critical current degradation is negligible or minimized.

### BACKGROUND OF THE INVENTION

Superconductors are materials which lack measurable electrical resistivity below a transition temperature (i.e., critical temperature, T_{c}). Materials having a T_{c} of 20 K and above are generally referred to as high-temperature superconductors (HTS). Superconducting materials also exhibit a critical current, I_{c}, which is the current at a specified temperature (and in the absence of external magnetic fields) above which the material is normal and below which the material is superconducting.

In order to obtain better mechanical properties, it is common to use composites of HTS materials and metals rather than using superconducting materials alone. These composites may be prepared in elongated forms such as wires and tapes by a well-known process which includes the three stages of: (i) forming a powder of superconductor precursor material (precursor powder formation stage); (ii) filling a metal container, such as a tube, billet or grooved sheet, with the precursor powder, and deformation processing one or more filled containers to provide a composite of reduced cross-section including one or more cores of superconductor precursor material in a surrounding noble metal matrix (composite precursor fabrication stage); and (iii) subjecting the composite to successive physical deformation and annealing cycles and further thermally processing the composite to form and sinter a core material having the desired superconducting properties (thermomechanical processing). The alignment of precursor grains in the core ("textured" grains) caused by the deformation process facilitates the growth of well-aligned and sintered grains of the desired superconducting material during later thermal processing stages.

The general process, commonly known as "powder-in-tube" or "PIT." is practiced in several variants depending on the starting powders, which may be, for example, metal alloys having the same metal content as the desired superconducting core material in the "metallic precursor" or "MPIT" process, or mixtures of powders of the oxide components of the desired superconducting oxide core material or of a powder having the nominal composition of the desired superconducting oxide core material in the "oxide powder" or "OPIT" process. General information about the PIT method described above and processing of the oxide superconductors is provided by Sandhage *et al.,* in JOM, Vol. 43, No. 3 (1991) pages 21-25, and the references cited therein.

As an example of the PIT method, a (Bi,Pb)SCCO precursor powder may be packed into a silver sheath to form a billet. The billet is extruded to a diameter of about 1/3 of the original diameter and then narrowed with multiple die passes. A mono-filamentary tape is fabricated by further extrusion and/or drawing of the billet to a wire, and then rolling the wire, for example, to a 0.15 x 0.25 cm (0.006" x 0.100")tape. Alternatively, a multi-filamentary tape may be fabricated by multiple die passes through hexagonally shaped dies of varying sizes to form a silver sheathed (Bi,Pb)SCCO hexagonal wire. Several of the hexagonal wires may bundled together and drawn through a round die to form a multi-filamentary round wire. The round wire may then be rolled, for example, to form a multi-filamentary silver and (Bi,Pb)SCCO composite precursor tape of a width of about 0.2 x 0.5 cm (0.080" to 0.200") and a thickness of about 0.01 x 0.025 cm (0.004" to 0.010"). The composite may be textured using by one or more texturing deformation steps.

It is often desirable to have long lengths (*e.g*., 1000 m) of such composites in the form of a wire or the like. For example, in the context of power transmission lines, it is desirable to wrap long lengths of HTS wire. Consequently, it is frequently necessary to splice composite wires together in order to form a joined wire of sufficient length.

U.S. Patent Nos. 5,116,810 and 5,321,003, both to Joshi *et al.,* are directed to processes and products for making electrical connections between superconducting elements, by joining metallic precursor elements prior to conversion to the oxide superconductor. Since the joints are formed prior to the oxidation process, joints formed in accordance with these patents are substantially non-resistive in nature. However, it is frequently inconvenient to perform such joining operations on HTS precursors, rather than on components in the superconducting state.

The inventors faced the problem of avoiding the disadvantages rising from joining superconducting components, including local strain concentration of the wire as a result of the thickness gradient of the joint and of the winding process. Prior art techniques have been deficient in that the joined wires used often suffer from significant critical current degradation. Wires formed by these techniques also experience further critical current degradation as a result of local strain concentrations during the winding process.

It would therefore be desirable to provide methods for joining HTS components such that critical current degradation is negligible or minimized, thereby overcoming the shortcomings associated with the prior art.

### SUMMARY OF THE INVENTION

The present invention provides methods for joining high temperature superconducting components, which minimize critical current degradation. This is accomplished by splicing or joining at least two high temperature superconducting components in a manner that results in articles having critical currents that are close to the critical currents of each of the high temperature superconducting components. The high temperature superconducting components may comprise (Bi,Pb)SSCO, YBCO, or other high temperature superconducting compositions.

In one aspect, the invention comprises a high temperature superconducting cable, which comprises a wire comprising two joined high temperature superconducting components. The high temperature superconducting components are connected by means of a solder layer, and a further protective layer may optionally be attached to the components. The shapes of the joined ends of the components are adapted to minimize the strain concentration of the wire. The connected portions of the components form an overlap segment; when the critical current is measured over an article length at least 100 times the length of the overlap segment, the critical current may be at least 80% of the lesser of the critical currents of the individual components. Preferably, the critical current may be at least 85 %, at least 90 %, at least 95 %, or at least 99% of the lesser of the critical currents of the individual components. Critical current is determined using a 1 µV/cm criterion. The superconducting components may be formed of the same material, and may comprise a (Bi.Pb)SSCO or YBCO superconductor. The protective layer may comprise a material selected from the group consisting of stainless steel, copper, copper-beryllium alloys, nickel-base superalloys, and nickel-iron-base superalloys, and may be attached to the components by means of a second solder material. This second solder material may have a lower melting temperature than the first material. The ends of the superconducting components may be triangular, diagonal, or inverted triangular. The cable may further comprise a second wire, which may have a helicity opposite to that of the first wire.

In another aspect, the invention comprises a method for minimizing strain concentration of high temperature superconducting wire components within a cable. Two high temperature superconducting components are joined by means of solder, and a protective layer may further be applied to the components. The connected portions of the components form an overlap segment; when the critical current is measured over an article length at least 100 times the length of the overlap segment, the critical current is at least 80% of the lesser of the critical currents of the individual components. Preferably, the critical current may be at least 85%, at least 90%, at least 95 %, or at least 99% of the lesser of the critical currents of the individual components. Critical current is determined using a 1 µV/cm criterion.

The foregoing has outlined some of the more pertinent objects of the present invention. These objects should be construed to be merely illustrative of some of the more prominent features and applications of the invention. Many other beneficial results can be attained by applying the disclosed invention in a different manner or modifying the invention as will be described. Accordingly, other objects and a fuller understanding of the invention may be had by referring to the following Detailed Description of the Preferred Embodiments.

### BRIEF DESCRIPTION OF THE DRAWINGS

For a fuller understanding of the present invention, reference is had to the following description taken in conjunction with the accompanying drawings, in which:
**FIG. 1** illustrates a high temperature superconductor laminate joint in accordance with one embodiment of the present invention;
**FIGS. 2A-2E** illustrate plan views of alternative splice geometries for high temperature superconductor joints in accordance with the present invention;
**FIGS. 3A-3C** respectively show the splice geometries of **FIGS. 2B, 2C** and **2E** in conjunction with a mandrel;
**FIG. 4** shows a superconducting cable according to one embodiment of the invention;
**FIG. 5** shows another superconducting cable according to another embodiment of the invention; and
**FIG. 6** illustrates a plot of volts v. amps during mechanical performance evaluation in accordance with one embodiment of the invention.

Similar reference characters refer to similar parts throughout the several views of the drawings.

### DETAILED DESCRIPTION OF THE PREFERRED EMBODIMENTS

High temperature superconductor wires or tapes formed in accordance with the present invention are suitable for use in a variety of applications. Because of the splicing techniques employed, these wires or tapes are particularly useful in situations where long lengths (*e.g.* 1000 m) of wire are desirable or required. As discussed herein, for example, joined wires formed in accordance with the present invention can be wound around mandrels, tubes and the like for use as power transmission lines. The alternative splicing geometries provided by the present invention, in conjunction with an applied protective layer, facilitate wrapping the wires or tapes around the mandrel and minimize critical current degradation. The components are suitable for use as power transmission lines, DC cables and current leads where the winding format occurs with a pitch.

As used herein, critical currents may be measured by any of the methods described in Elkin, *Appl. Phys. Lett.* **56**(9):905-907; Goodrich, *et al., Cryogenics* **30**:667-677; or Schwenterly, *et al., IEEE Trans. on Applied Supercond.* **3**(1):949-952. The methods of Elkin were used to determine the critical currents reported herein, using a 1 µV/cm criterion.

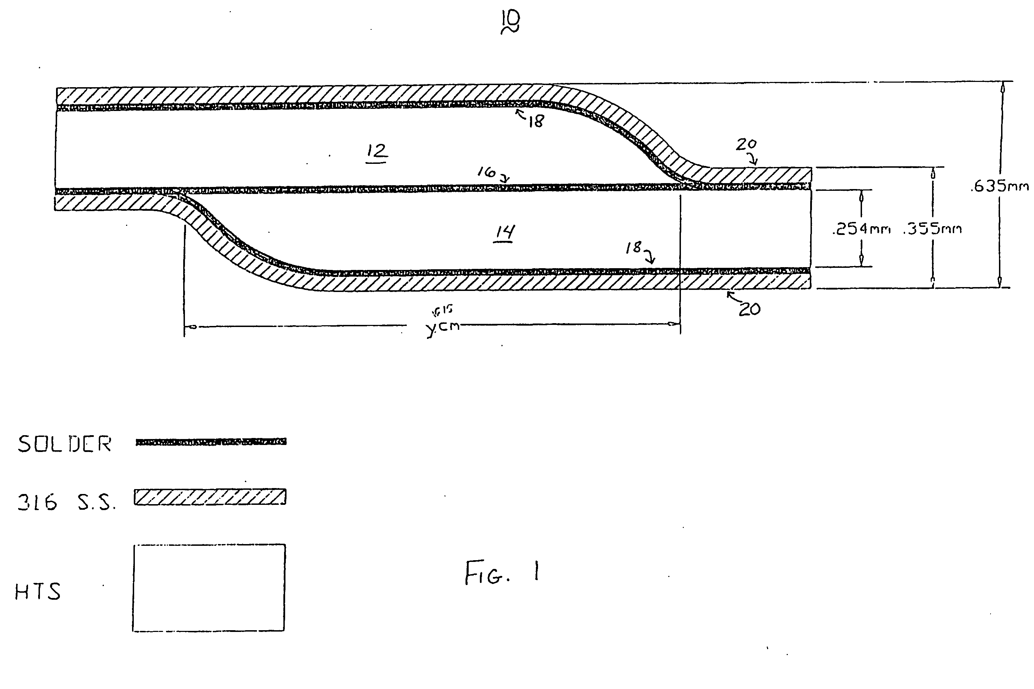

Referring now to **FIG. 1**, laminate joint **10** includes high temperature superconducting (HTS) components **12** and **14**. HTS components 12 and 14 each include at least one oxide superconducting filament (*i.e.* HTS filament) embedded in a noble metal matrix, where a metal is considered to be "noble" if its reaction products are thermodynamically unstable under the reaction conditions employed relative to the desired superconducting ceramic, or if it does not react with the superconducting ceramic or its precursors under the conditions of manufacture of the composite. Such **HTS** components can be made, for example, by powder-in-tube methods. Suitable noble metals include, for example, silver (Ag), gold (Au), platinum (Pt), palladium (Pd) and alloys thereof. The HTS filament can be a mono-filamemt or multi-filament. For example and while not to be construed as limiting, suitable HTS filament counts may range from 19 to 121. In a preferred embodiment, HTS components **12** and **14** are formed of the same material, for example of 85 (Bi,Pb)SSCO filaments embedded in a silver metal matrix. HTS components **12** and **14** are in their superconducting state (i.e., not precursors) at the time that the joint is formed. This facilitates processing of cables in the field, since joined components need not be heat treated or otherwise processed to form superconducting oxides.

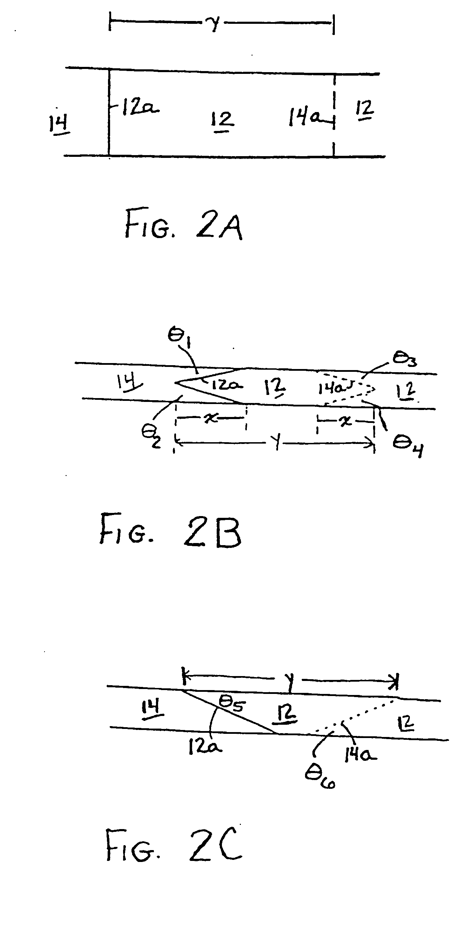

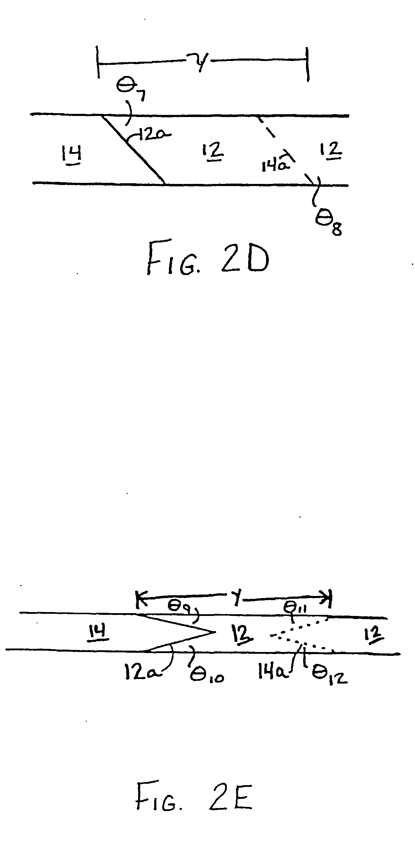

Components **12** and **14** are joined together by solder material **16**. While a variety of materials can be used to solder components **12** and **14**, it is important that the material of solder **16** be such that critical current degradation across the area of overlap (shown in **FIGS. 1** and **2** as *y*) is negligible or minimized. Exemplary solder materials **16** include standard silver-lead-tin and lead-tin solders. In one embodiment, the melting point of solder material **16** is about 285° C and the melting point of solder **18** is about 185°C. As discussed herein, the melting point of solder **16** preferably is greater than the melting point of solder **18** such that the solder material **16** does not begin to reflow when the protective material is applied.

Once the HTS wire is joined (*i.e*. by soldering HTS components **12** and **14** together), the joined wire may be subjected to lamination by a protective material **20**. In a preferred embodiment, protective material **20** is stainless steel (*e.g*, **316** stainless steel), but other protective materials, such as copper and beryllium-copper alloys, also fall within the scope of the invention. Protective material **20** may also be used to protect the noble metal matrix. When silver is used as the wire material, for example, the protective material **20** protects the silver and makes the laminate more robust.

Protective material **20** is joined to the joined wire using solder **18**. Exemplary solder materials **18** include 3%Ag/97%Pb, 10%Sn/88%Pb/2%Ag, 5%Sn/95%Pb, 5%Sn/94%Pb/2%Ag, 3%Sn/97%Pb, 63%Sn/37%Pb, 62%Sn/36%Pb/2%Ag and 60%Sn/40%Pb (all percentages are weight percent). The first five of these exemplary solder compositions are relatively high melting point solders, and are preferred for material **16**, while the last three are near-entectic, low melting point solders, and are preferred for material **18**. The melting point of solder **16** preferably is greater than the melting point of solder **18** such that the solder joint does not begin to reflow when the solder **18** is applied. If desired, lamination of protective material **20** to the joined wire may be accomplished using two rolls of protective material, one roll above a roll of joined HTS wire and one roll below the roll of joined wire. The three rolls are then passed through a solder bath to form the laminated wire. Methods of laminating superconducting wires are disclosed in U.S. Patent No. 5,801,124, issued September 1, 1998, and in copending and commonly assigned U.S. application Serial Nos. 08/701.373 and 08/705,811, both filed August 30, 1996.

A protective material may not always be required (for example, in coil applications). The use of a protective material, however, can be used to reduce problems associated with poor mechanical performance with regard to winding.

The resulting laminates **10** formed in accordance with the present invention are advantageous in that critical current degradation is minimized across the joined overlap length (shown in **FIG. 1** as *y*). The joints so formed exhibit superior strength, minimizing local strain concentrations (*e.g*., due to kinking, flexion, and torsion) at the joint, and low resistivity, minimizing the degradation of the critical current of the jointed wire.

In addition, the laminates can be formed in a manner that minimizes critical current degradation even though the laminates are subjected to bending, winding or the like. For example, laminate joint **10** may be wound around mandrels, tubes and the like for use as power transmission lines. Various splicing geometries or configurations for forming laminate joints are shown in **FIGS. 2A-2E**. These splicing configurations can be used to join HTS components such that the laminates can be wound around mandrels with minimal critical current degradation. This is a significant improvement over prior art techniques of joining HTS components because the present invention provides laminate joints that account for the bending and/or winding process.

For instance, a longer overlap in the joined wire (shown in **FIGS. 1** and **2** as *y*) is typically desirable for minimizing resistance because of increased surface area of the joint materials. In situations where the laminate is to be wound around a mandrel, however, a shorter overlap is typically desirable. Laminate joints formed in accordance with the present invention are designed to account for such variables and minimize critical current degradation. In some embodiments, overlaps in accordance with the present invention are about 5-15 cm in length. It will be appreciated by those skilled in the art, however, that such overlap lengths are not so limited and will vary depending on the application.

Referring now to **FIGS. 2A-2E**, plan views of several alternative splice geometries for high temperature superconductor joints in accordance with the present invention are shown. The embodiments illustrated in **FIGS. 2A-2E** are shown without the protective material **20**. It will be appreciated that the embodiments shown in **FIGS 2A-2E** can be laminated as discussed hereinabove.

The embodiment illustrated in **FIG. 2A** has a perpendicular geometry or configuration (*i.e*. the respective ends **12a** and **14a** of HTS components **12** and **14** are perpendicular or substantially perpendicular to the overlap y). Components **12** and **14** are joined together using solder **16** as discussed hereinabove. The embodiment shown in **FIG. 2A** may be desirable for coil geometries, whose applications include electric motors, generators, and transformers.

In some embodiments, it may be desirable to utilize HTS components having non-perpendicular ends. In particular, the HTS components in such embodiments each have an end with a splice geometry or configuration having predetermined angles other than 90° . When winding a joined wire around a mandrel or the like, for example, it may be desirable to configure the ends of the joined components with angles and configurations to facilitate such wrapping. Embodiments illustrating such configurations are shown in **FIGS. 2B-2E**.

As shown in **FIG. 2B**, end **12a** of HTS component **12** is configured in the form a substantially triangular end. θ₁ and θ₂ preferably are between about 4-60°. While it is not necessary that θ₁ and θ₂ are equal, it is preferred that the angles of θ₁ and θ₂ be equal. As also shown in **FIG. 2B**, end **14a** of HTS component **14** is similarly configured in the form a substantially triangular end. θ₃ and θ₄ preferably are between about 4-60°. While it is not necessary that θ₃ and θ₄ are equal, it preferred that the angles of θ₃ and θ₄ be equal.

As discussed herein, the distance *x* can be varied depending on the application being utilized. In some situations, it may be desirable to have x relatively long (relative to the overlap distance y) to prevent flexing when the joined material is wound around a relatively small diameter tube or mandrel. In such situations, angles θ₁*,* θ₂, θ₃ and θ₄ are varied accordingly. In other circumstances, it maybe desirable to have *x* relatively short (relative to the overlap distance *y*) to prevent flexing when the joined material is wound around a relatively large diameter tube or mandrel. In this manner, the geometry of the joined wire can be altered for use in conjunction with a mandrel without significant critical current degradation.

Another alternative embodiment for splicing geometry is shown in **FIG 2C**. As shown in **FIG. 2C**, end **12a** of HTS component **12** has a diagonal end (*i.e.* the end has a slanted or oblique direction). θ₅ preferably is between about 4-60°. Similarly, end **14a** of HTS component **14** has a diagonal end. θ₆ preferably is between about 4-60'. The embodiment shown in **FIG. 2D** is similar to that shown in **FIG. 2C** in that ends **12a** and **14a** each have diagonal ends (*i.e.* the ends have a slanted or oblique direction). In the embodiment shown in **FIG. 2D**, θ₈. is greater than 90° while θ₆ in **FIG. 2C** is less than 90°. θ₁ preferably is between about 4-60°.

**FIG. 2E** illustrates yet another alternative embodiment in accordance with the present invention. In this embodiment, end **12a** of HTS component **12** is configured in the form of a substantially inverted triangular end. θ₉ and θ₁₀ also each form a triangular configuration. Likewise, end **14a** of HTS component **14** is configured in the form of a substantially inverted triangular end. θ₁₁ and θ₁₂ also each form a triangular configuration.

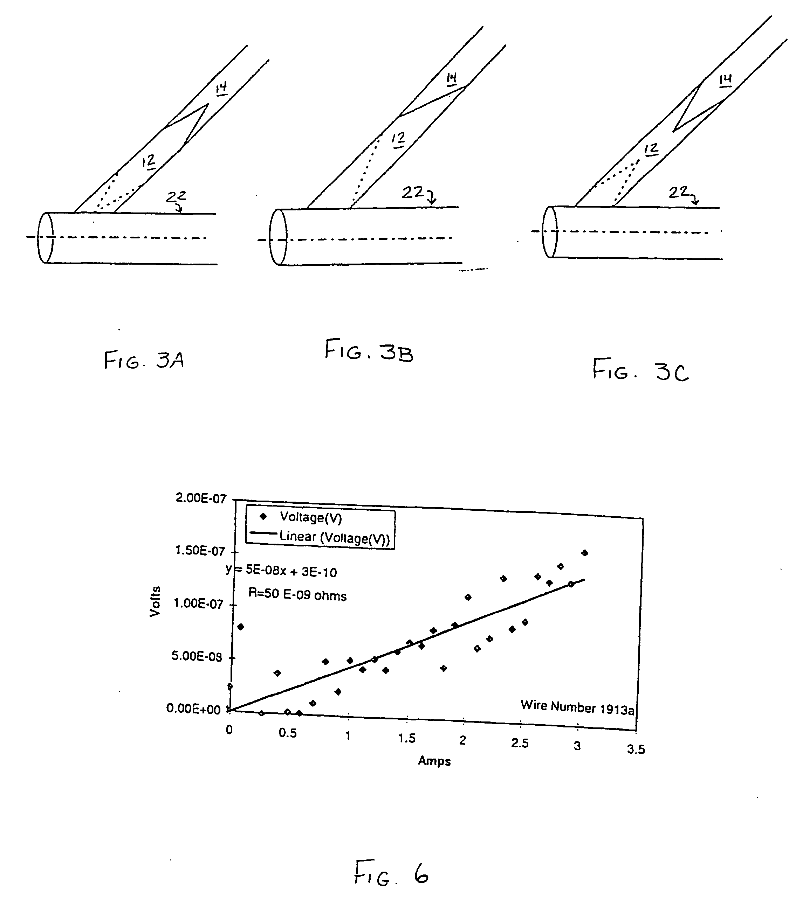

The embodiments shown above, and in particular the embodiments shown in **FIGS. 2A-2E**, allow the laminated joined wire to be wound around a mandrel or the like without or substantially without critical current degradation. The embodiments shown in **FIGS. 2B-2E** are the most preferred of the illustrated embodiments. Such configurations also facilitate bending or winding of the laminate without kinking. **FIGS. 3A-3C** respectively show the splice geometries of **FIGS. 2B, 2C** and **2E** in conjunction with a mandrel. The material of construction for mandrel **22** can be varied depending on the desired application. For power transmission lines, it may be desirable to have the mandrel **22** formed of stainless steel, copper, or aluminum.

The present invention thus provides a method for improving mechanical performance of spliced HTS wire during mechanical twisting and the like. More specifically, the present method provides joined HTS components with minimal critical current degradation and minimal local strain concentrations.

The invention can be modified to adjust for various processing criteria. For example, the splice geometry can be altered to avoid or minimize formation of gaps between the mandrel and the wound tape along the splice. The length of the overlap in the joint can be lengthened or shortened to account for parameters such as resistance, pitch, diameter of the mandrel, tube or the like. When a non-perpendicular geometry is used, the splice configuration allows for a longer cut, thereby providing a more gradual thickness variation. This may be advantageous, for example, when winding around a mandrel. As discussed above, one of the advantages of the splice geometries provided by the present invention is the ability to minimize resistance. When two or more HTS tapes are joined in accordance with the present invention, the resistance of the joint is minimized by the splice geometry and resulting current distribution.

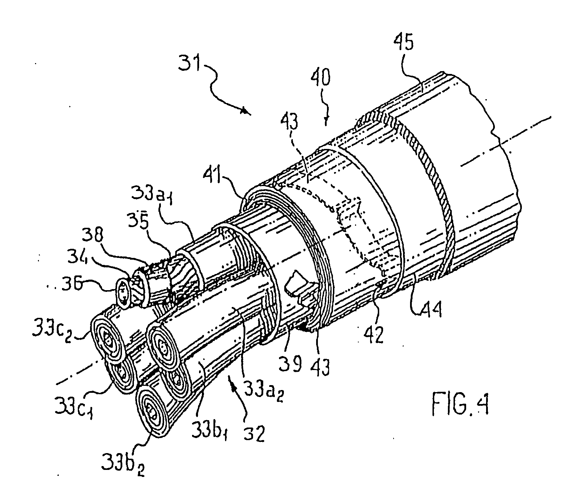

These joining techniques may be applied to the application of forming superconducting cables which comprise multiple superconducting filaments wound around a core, *e.g**.***, helically wound filaments. Some techniques and cable configurations suitable for use with the invention are given, for example, in European Patent 0 786 783. One such cable embodiment, a three-phase superconducting cable **31** with a cold dielectric, is illustrated in **FIG. 4**. The cable **31** comprises a superconducting core **32**, a cryostat **40**, and a protection layer **45**. The superconducting core **32** comprises conductive elements **33**, housed ― preferably loosely ― within a tubular shell **39**. The shell may be made, for example, of a metal such as steel or aluminum.

The conductive elements each correspond to one of the three phases, and are designated **33a**, **33**b**,** and **33c** accordingly. Preferably, as shown, more than one superconducting element **33** is provided for each phase, to reduce the current carried by any individual element. Each conducting element **33** comprises a pair of coaxial conductors, respectively phase **34** and return **35** conductors, each including at least one layer of superconducting material. A layer of dielectric material **38** is interposed between the phase **34** and return **35** conductors to provide electrical insulation. The dielectric layer **38** may be, for example, laminated polypropylene, and may serve as a support for the return conductor **35**. One or more layers of semiconducting or metallic materials may also be provided between the phase **34** and return **35** conductors, for example as an electrostatic shield.

The phase conductor **34** is supported by a tubular element **36**, which preferably has a diameter in the range of 19-60 mm. The tubular element **36** may comprise any of a wide variety of materials, such as spiral wound metal or plastic, or tubing such as copper or PTFE tubing. If the tubular element **36** comprises a thermally conductive material such as a metal, it may serve to thermally stabilize the superconductor tapes in case of an overload.

The superconducting material of the conductors **34** and **35** is incorporated into tapes wound onto supporting elements **36** and **38** in one or more layers. The tapes so wound may comprise joints as described above, to minimize current degradation in long lengths of cable. The tapes are preferably wound at pitches in the range of 10-60°, for example at 30°. The tapes may be wound in multiple layers, which may or may not be electrically insulated from one another. Either conductor may also include one or more metallic tapes (*e.g*., copper tapes), for thermal stabilization.

The maximum number of coaxial conductive elements **33** is determined by the minimum diameter of such elements compatible with the winding deformations of the superconducting tapes, or with the critical tensile deformation of the superconducting material.

Cable **31** further comprises suitable means for cooling the superconducting core **32** to a temperature sufficiently below the critical temperature of the superconducting material. This cooling means comprises a pump (not shown) suppling a suitable cooling fluid. For example, liquid nitrogen may be a suitable cooling fluid for the so-called "high-temperature" superconductors, for which preferable cooling temperatures may be in the range of 65-90°K. Coolant may flow both in the hollow core of each of the conductive elements **33**, and in the gap between the elements and the containing shell **39**.

In order to minimize thermal loss to the external environment, the superconducting core **32** is enclosed in a cryostat **40**, comprising thermal insulation (*e.g.*, multi-layer insulation). The outermost layer forms a protection sheath **45**. A suitable cryostat is described, for example, in *IEEE Trans. on Power Delivery*, 7(4):1745-1753, October 1992.

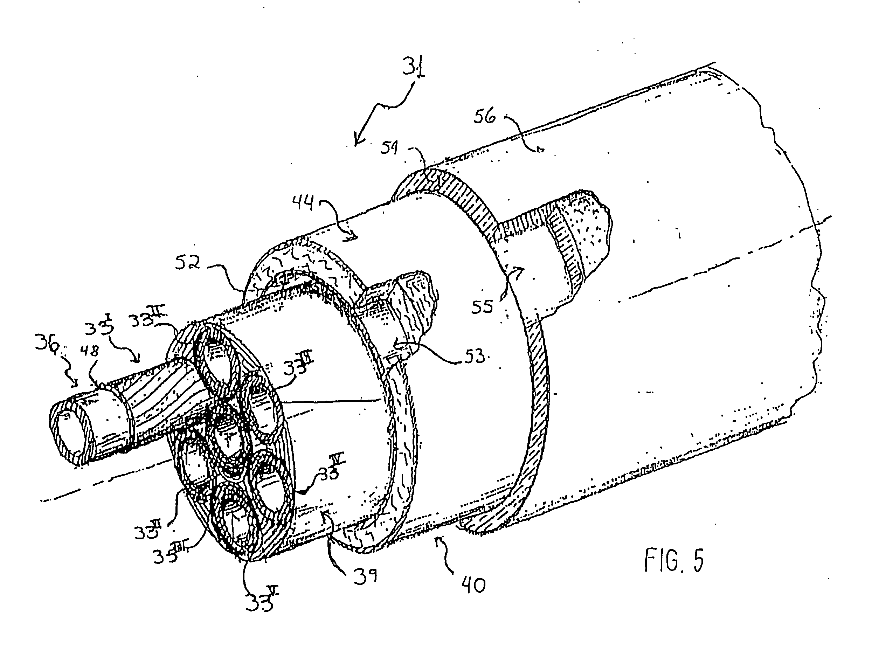

**FIG. 5** depicts another cable in which the joints of the invention can be used, a mono-phase, noncoaxial superconducting cable with a warm dielectric. In this embodiment, conducting elements 33^{I}, 33^{II}, ... 33^{VII} comprise helically wound superconducting tapes **48** in one or more layers, wound around supporting element **36**. Liquid nitrogen flows in gap **52** and in tubular element **53** to keep the bundle of conducting elements **33** cold. On the outside of the cable **31** are disposed a semiconducting layer **55**, a dielectric layer **54**, and another semiconducting layer **56**. The semiconducing layers, which may be, for example, layers of kraft paper, serve as electrostatic shields. Such a cable may also have a grounded electrical shield (not shown) over the semiconducting layer **56**, and a protection sheath (not shown). The dielectric and semiconducting layers may be made of stratified or extruded materials.

In the cables shown in **FIGS. 4** and **5**, axial or peripheral cable traction elements (not shown) may also be present, to limit the mechanical stresses applied to the superconducting elements **33**. Such traction elements may be formed by methods known in the art, and may comprise peripherally arranged metal reinforcements such as stranded steel wires, one or more axial metal strands, and/or dielectric reinforcements such as aramidic fibers.

The following examples are intended to be illustrative and should not be construed as limiting the invention.

### EXAMPLE 1

A silver wire laminated with stainless steel and having the splice geometry shown in **FIG. 2A** was tested for critical current degradation after splicing. In this example, the wire laminate was not bent; the critical current was measured before and after splicing without bending the wire laminate.

In particular the silver wire laminated with stainless steel in this example had a width of about 0.41cm (0.162 inches) and a thickness of 0.31 cm (0.0125 inches). The critical currents at various sections in the laminate before cutting the laminate for lap-joint are shown in **Table 1**.

**Table 1.**

| **Before cutting for lap joint.** | | |
|---|---|---|
| Sample ID. | Length (cm.) | Critical current (A) (using a 1µV/cm criterion for zero resistivity) |
| Wire Length | 18620 | 28.1 |
| 1st Section | 1960 | 27.7 |
| 2nd Section | 1960 | 30.5 |
| 3rd Section | 1960 | 29.5 |
| 4th Section | 1960 | 29.3 |
| 5th Section | 1960 | 28.5 |
| 6th Section | 1960 | 27.7 |
| 7th Section | 1960 | 27.1 |
| 8th Section | 1960 | 27.3 |
| 9th Section | 1960 | 29.1 |
| 10th Section | 980 | 28.1 |

The critical currents at various sections in the laminate after cutting the laminate for 14 cm a (5 1/2 inch) lap joint in section 5, arranged as shown in **FIG. 2A**, are shown in **Table 2**.

**Table 2.**

| **After cut for 14 cm (5 ½ inch) lap joint in section 5.** | | |
|---|---|---|
| Sample ID. | Length (cm.) | Critical current (A) (using a 1µV/cm criterion for zero resistivity) |
| Wire Length | 18606 | 27.9 |
| 1st Section | 1960 | 27.3 |
| 2nd Section | 1960 | 30.1 |
| 3rd Section | 1960 | 29.1 |
| 4th Section | 1960 | 28.9 |
| 5th Section | 1946 | 28.1 |
| 6th Section | 1960 | 27.3 |
| 7th Section | 1960 | 26.9 |
| 8th Section | 1960 | 26.7 |
| 9th Section | 1960 | 28.7 |
| 10th Section | 980 | 27.7 |

As can be seen, the critical current in section **5**, which includes the lap joint, was not degraded more by the splicing process than the other sections.

### EXAMPLE 2

In this Example, silver BSCCO (bismuth, strontium, calcium, copper and oxygen) multi-filament wire samples laminated with 304 stainless steel as described above were tested for critical current degradation. Some of the wires were tested without any splicing in the sample while other samples contained splices. All wires had a length of 50 cm. The samples containing splices had a splice geometry shown in **FIG. 2B**. The value of *x* was 1 cm and the value of y was 5 cm. The critical current of the samples was measured before and after twist testing, described below. The results are shown below in **Table 3**.

**Table 3.**

| **Critical Currents Before and After Twisting** | | | |
|---|---|---|---|
| | Before Twisting | After 16° Twisting | |
| Splice Length | I_{c} (A) (using a 1µV/cm criterion for zero resistivity) | I_{c} (A) (using a 1µV/cm criterion for zero resistivity) | % Retention |
| None | 60.38 | 54.7 | 91 |
| None | 60.998 | 57.2 | 94 |
| None | 66.98 | 58.4 | 96 |
| None | 58.77 | 56.6 | 96 |
| 5 cm. | 58.7 | 53.7 | 91 |
| 5 cm. | 60.58 | 57.8 | 95 |
| 5 cm. | 37.8 | 36 | 95 |
| 5 cm. | 43.8 | 42.6 | 97 |

The twist test comprised wrapping the wire helically around a 31 mm diameter mandrel 10 times at a pitch of 30°. The mandrel was then twisted 16°, producing a primarily tensile strain in the wire. As can be seen from **Table 3**, the percentage of critical current retention after twisting in the samples with no splicing was in the range of 91-96 % . The percentage of critical current retention after twisting in the samples with a 5 cm splice was in the range of 91-97%. Thus, no measurable difference was apparent in the degradation of wires with and without splices.

### EXAMPLE 3

In this Example, a stainless steel laminated multi-filamentary BSCCO silver wire having a splice geometry shown in **FIG. 2A** was used to measure critical current retention for various twist angles. Again, the wires were wound on a 31 mm diameter mandrel at a 30° pitch, and the mandrel was twisted through angles ranging from 12°-24°, producing increasing strains on the wires. The value of *x* was 1.5 cm and the value of y was 5 cm. The results of this test are shown in **Table 4**.

**Table 4.**

| **Critical Current Retention** | | |
|---|---|---|
| Twist Angle | Original I_{c} (A) (using a 1µV/cm criterion for zero resistivity) | Average I_{c} Retention |
| 12° | 25-52 | 96 |
| 16**°** | 21-49 | 96 |
| 20° | 34-58 | 93 |
| 24° | 30-53 | 92 |

As can be seen, the average critical current retention decreased with increasing twist angle, but remained greater than 90% in all cases.

### EXAMPLE 4

In this Example, four splices having a splice geometry shown in **FIG. 2B** were used to evaluate the mechanical performance of the splice/tape during mechanical (twist) testing. The four splices were wrapped at a 30° pitch on a 31 mm diameter mandrel and twist tested at 16° 10 times using a silver BSCCO (bismuth, strontium, calcium, copper and oxygen) multi-filament wire. The critical current retention for the spliced and unspliced wire was 95 % or greater.

The measured resistance of the splice at 77K was also measured with voltage taps about 6 cm on either side of the splice. A plot of the measured voltage v. current is shown in **FIG. 6**. The resistance, which was determined from the slope of the current-voltage curve, was measured at about 50 nano-ohms.

It should be appreciated by those skilled in the art that the specific embodiments disclosed above may readily be utilized as a basis for modifying or designing other methods or structures for carrying out the same purpose of the present invention. It should also be realized by those skilled in the art that such equivalent constructions do not depart from the scope of the invention as set forth in the appended claims.

## Claims

1. A superconducting cable (31), comprising:
(a) a core member (36); and
(b) a first high temperature superconducting wire (34,48) wrapped helically around the core member (36), where the first high temperature superconducting wire(34,48) comprises
(i) a first high temperature superconducting component (12) having a first end (12a) and a second end;
(ii) a layer of a first solder material (16), a portion of the solder layer (16) attached to at least a portion of the first end (12a) of first high temperature superconducting component (12); and
(iii) a second high temperature superconducting component (14) having a first end (14a) and a second end, at least a portion of the first end (14a) of the second high temperature superconducting component (14) attached to a portion of the solder layer (16),
wherein the portion of the first high temperature superconducting component (12) attached to the solder material (16) and the portion of the second high temperature superconducting component (14) attached to the solder material (16) form an overlap segment (15);
wherein the shape of the first end (12a,14a) of at least one of the first and second high temperature superconducting components (12,14) is adapted to minimize strain concentration of said wire (34,48), and
wherein a section of the first superconducting wire (34,48) having a length at least 100 times the length of the overlap segment has a critical current at least 80% of the lesser of critical currents of the first and second high temperature superconducting components (12,14), where critical current is determined using a 1 µV/cm criterion.

2. The cable of claim 1, further comprising at least one protective layer (20) connected to the first ends (12a, 14a) of the first and second high temperature superconducting components (12,14).

3. The cable of claim 1, further comprising a second high temperature superconducting wire (35) wrapped helically around a core (38), where the first and second high temperature superconducting wires (34,35) have opposite helicity.

4. The cable of claim 1, wherein the first high temperature superconducting wire (34,48) is wrapped around the core (36) with a constant pitch.

5. The cable of claim 1, wherein the first end (12a) of the first high temperature superconducting component (12) is substantially triangular.

6. The cable of claim 5, wherein the first end (14a) of the second high temperature superconducting component (14) is substantially triangular.

7. The cable of claim 1, wherein the first end (12a) of the first high temperature superconducting component (12) is substantially diagonal.

8. The cable of claim 7, wherein the first end (14a) of the second high temperature superconducting component (14) is substantially diagonal.

9. The cable of claim 1, wherein the first end (12a) of the first high temperature superconducting component (12) is substantially inverted triangular.

10. The cable of claim 9, wherein the first end (14a) of the second high temperature superconducting component (14) is substantially inverted triangular.

11. The cable of claim 1, wherein the overlap segment has a critical current at least 85 % of the lesser of the critical currents of the first and second high temperature superconducting components (12,14).

12. The cable of claim 11, wherein the overlap segment has a critical current at least 90% of the lesser of the critical currents of the first and second high temperature superconducting components (12,14).

13. The cable of claim 11, wherein the overlap segment has a critical current at least 95% of the lesser of the critical currents of the first and second high temperature superconducting components (12,14).

14. The cable of claim 11, wherein the overlap segment has a critical current at least 99 % of the lesser of the critical currents of the first and second high temperature superconducting components (12,14).

15. A method for minimizing strain concentration of a first high temperature superconducting wire (34,48) in a superconducting cable (31) as claimed in the preceding claims, said first high temperature superconducting wire (34,48) having at least two high temperature superconducting components (12,14), comprising:
providing a first high temperature superconducting component (12) having first (12a) and second ends;
providing a second high temperature superconducting component (14) having first (14a) and second ends;
applying a solder layer (16) to the first and second high temperature superconducting components (12,14) to form a joint (10); and
helically winding the joined first and second superconducting components (12,14) forming a first high temperature superconducting wire (34,48) on a core (36) thereby forming said superconducting cable (31),
wherein the portion of the first high temperature superconducting component (12) attached to the solder material (16) and the portion of the second high temperature superconducting component (14) attached to the solder material (16) form an overlap segment (15) having a critical current at least 80% of the lesser of critical currents of the first and second high temperature superconducting components (12,14), the overlap segment critical current being measured over an article length at least 100 times the length of the overlap segment, where critical current is determined using a 1 µV/cm criterion.

16. The method of claim 15, wherein the overlap segment has a critical current at least 85 % of the lesser of the critical currents of the first and second high temperature superconducting components (12,14).

17. The method of claim 15, wherein the overlap segment has a critical current at least 90% of the lesser of the critical currents of the first and second high temperature superconducting components (12,14).

18. The method of claim 15, wherein the overlap segment has a critical current at least 95 % of the lesser of the critical currents of the first and second high temperature superconducting components (12,14).

19. The method of claim 15, wherein the overlap segment has a critical current at least 99 % of the lesser of the critical currents of the first and second high temperature superconducting components (12,14).

20. The method of claim 15, wherein the first end (12a) of the first high temperature superconducting component (12) is substantially triangular.

21. The method of claim 20, wherein the first end (14a) of the second high temperature superconducting component (14) is substantially triangular.

22. The method of claim 15, wherein the first end (12a) of the first high temperature superconducting component (12) is substantially diagonal.

23. The method of claim 22, wherein the first end (14a) of the second high temperature superconducting component (14) is substantially diagonal.

24. The method of claim 15, wherein the first end (12a) of the first high temperature superconducting component (12) is substantially inverted triangular.

25. The method of claim 24, wherein the first end (14a) of the second high temperature superconducting component (14) is substantially inverted triangular.

26. The method of claim 15, further comprising applying at least one protective layer (20) to the first and second high temperature superconducting components (12,14).

27. The method of claim 26, wherein the protective layer (20) is attached by means of a second solder layer (18).

28. The method of claim 27, wherein the second solder layer (18) has a lower melting temperature than the first solder layer (16).

## Patentansprüche

1. Supraleitendes Kabel (31) mit:
(a) einem Kernelement (36); und
(b) einem ersten hochtemperatursupraleitenden Draht (34, 48), der spiralförmig um das Kernelement (36) gewickelt ist, wobei der erste hochtemperatursupraleitende Draht (34, 48) aufweist
(i) eine erste hochtemperatursupraleitende Komponente (12) mit einem ersten Ende (12a) und einem zweiten Ende;
(ii) eine erste Schicht aus einem ersten Lötmaterial (16), wobei ein Abschnitt der Lötschicht (16) an zumindest einem Abschnitt des ersten Endes (12a) der ersten hochtemperatursupraleitenden Komponente (12) angebracht ist; und
(iii) eine zweite hochtemperatursupraleitende Komponente (14) mit einem ersten Ende (14a) und einem zweiten Ende, wobei zumindest ein Abschnitt des ersten Endes (14a) der zweiten hochtemperatursupraleitenden Komponente (14) an einem Abschnitt der Lötschicht (16) angebracht ist,
wobei der Abschnitt der ersten hochtemperatursupraleitenden Komponente (12), die an dem Lötmaterial (16) angebracht ist, und der Abschnitt der zweiten hochtemperatursupraleitenden Komponente (14), die an dem Lötmaterial (16) angebracht ist, ein Überlappsegment (15) bilden;
wobei die Form des ersten Endes (12a, 14a) der ersten und/oder der zweiten hochtemperatursupraleitenden Komponente (12, 14) dafür angepasst ist, die Dehnungskonzentration des Drahtes (34, 48) zu minimieren, und
wobei ein Bereich des ersten supraleitenden Drahtes (34, 48), der eine Länge von zumindest dem 100-fachen der Länge des Überlappsegmentes besitzt, einen kritischen Strom besitzt, der mindestens 80% des geringsten der kritischen Ströme der ersten und der zweiten hochtemperatursupraleitenden Komponente (12, 14) ist,
wobei der kritische Strom unter Verwendung eines 1 µV/cm Kriteriums bestimmt ist.

2. Kabel nach Anspruch 1, des weiteren mit zumindest einer Schutzschicht (20), die mit den ersten Enden (12a, 14a) der ersten und der zweiten hochtemperatursupraleitenden Komponente (12, 14) verbunden ist.

3. Kabel nach Anspruch 1, des weiteren mit einem zweiten hochtemperatursupraleitenden Draht (35), der spiralförmig um einen Kern (38) gewickelt ist, wobei der erste und der zweite hochtemperatursupraleitende Draht (34, 35) entgegengesetzte Helizitäten besitzen.

4. Kabel nach Anspruch 1, bei dem der erste hochtemperatursupraleitende Draht (34, 48) um den Kern (36) mit konstanter Steigung gewickelt ist.

5. Kabel nach Anspruch 1, bei dem das erste Ende (12a) der ersten hochtemperatursupraleitenden Komponente (12) im wesentlichen dreieckig ist.

6. Kabel nach Anspruch 5, bei dem das erste Ende (14a) der zweiten hochtemperatursupraleitenden Komponente (14) im wesentlichen dreieckig ist.

7. Kabel nach Anspruch 1, bei dem das erste Ende (12a) der ersten hochtemperatursupraleitenden Komponente (12) im wesentlichen diagonal ist.

8. Kabel nach Anspruch 7, bei dem das erste Ende (14a) der zweiten hochtemperatursupraleitenden Komponente (14) im wesentlichen diagonal ist.

9. Kabel nach Anspruch 1, bei dem das erste Ende (12a) der ersten hochtemperatursupraleitenden Komponente (12) im wesentlichen umgekehrt dreieckig ist.

10. Kabel nach Anspruch 9, bei dem das erste Ende (14a) der zweiten hochtemperatursupraleitenden Komponente (14) im wesentlichen umgekehrt dreieckig ist.

11. Kabel nach Anspruch 1, bei dem das Überlappsegment einen kritischen Strom besitzt, der mindestens 85% des geringsten der kritischen Ströme der ersten und der zweiten hochtemperatursupraleitenden Komponente (12, 14) ist.

12. Kabel nach Anspruch 11, bei dem das Überlappsegment einen kritischen Strom besitzt, der mindestens 90% des geringsten der kritischen Ströme der ersten und der zweiten hochtemperatursupraleitenden Komponente (12, 14) ist.

13. Kabel nach Anspruch 11, bei dem das Überlappsegment einen kritischen Strom besitzt, der mindestens 95% des geringsten der kritischen Ströme der ersten und der zweiten hochtemperatursupraleitenden Komponente (12, 14) ist.

14. Kabel nach Anspruch 11, bei dem das Überlappsegment einen kritischen Strom besitzt, der mindestens 99% des geringsten der kritischen Ströme der ersten und der zweiten hochtemperatursupraleitenden Komponente (12, 14) ist.

15. Verfahren zum Minimieren der Dehnungskonzentration eines ersten hochtemperatursupraleitenden Drahtes (34, 48) in einem supraleitenden Kabel (31) nach den vorhergehenden Ansprüchen, wobei der erste hochtemperatursupraleitende Draht (34, 48) mindestens zwei hochtemperatursupraleitende Komponenten (12, 14) besitzt, mit den Schritten:
Vorsehen einer ersten hochtemperatursupraleitenden Komponente (12) mit einem ersten (12a) und einem zweiten Ende;
Vorsehen einer zweiten hochtemperatursupraleitenden Komponente (14) mit einem ersten (14a) und einem zweiten Ende;
Auftragen einer Lötschicht (16) auf die erste und die zweite hochtemperatursupraleitende Komponente (12, 14), um eine Verbindung (10) zu bilden; und
spiralförmiges Wickeln der verbundenen ersten und zweiten supraleitenden Komponenten (12, 14), die einen ersten hochtemperatursupraleitenden Draht (34, 48) bilden, um einen Kern (36), um dadurch das supraleitende Kabel (31) zu bilden,
wobei der Abschnitt der ersten hochtemperatursupraleitenden Komponente (12), die an dem Lötmaterial (16) angebracht ist, und der Abschnitt der zweiten hochtemperatursupraleitenden Komponente (14), die an dem Lötmaterial (16) angebracht ist, ein Überlappsegment (15) bilden, das einen kritischen Strom besitzt, der mindestens 80% des geringsten der kritischen Ströme der ersten und der zweiten hochtemperatursupraleitenden Komponente (12, 14) ist, wobei der kritische Strom des Überlappsegmentes über eine Gegenstandslänge von mindestens dem 100-fachen der Länge des Überlappsegmentes gemessen wird, und wobei der kritische Strom unter Verwendung eines 1 µV/cm-Kriteriums bestimmt wird.

16. Verfahren nach Anspruch 15, bei dem das Überlappsegment einen kritischen Strom besitzt, der mindestens 85% des geringsten der kritischen Ströme der ersten und der zweiten hochtemperatursupraleitenden Komponente (12, 14) ist.

17. Verfahren nach Anspruch 15, bei dem das Überlappsegment einen kritischen Strom besitzt, der mindestens 90% des geringsten der kritischen Ströme der ersten und der zweiten hochtemperatursupraleitenden Komponente (12, 14) ist.

18. Verfahren nach Anspruch 15, bei dem das Überlappsegment einen kritischen Strom besitzt, der mindestens 95% des geringsten der kritischen Ströme der ersten und der zweiten hochtemperatursupraleitenden Komponente (12, 14) ist.

19. Verfahren nach Anspruch 15, bei dem das Überlappsegment einen kritischen Strom besitzt, der mindestens 99% des geringsten der kritischen Ströme der ersten und der zweiten hochtemperatursupraleitenden Komponente (12, 14) ist.

20. Verfahren nach Anspruch 15, bei dem das erste Ende (12a) der ersten hochtemperatursupraleitenden Komponente (12) im wesentlichen dreieckig ist.

21. Verfahren nach Anspruch 20, bei dem das erste Ende (14a) der zweiten hochtemperatursupraleitenden Komponente (14) im wesentlichen dreieckig ist.

22. Verfahren nach Anspruch 15, bei dem das erste Ende (12a) der ersten hochtemperatursupraleitenden Komponente (12) im wesentlichen diagonal ist.

23. Verfahren nach Anspruch 22, bei dem das erste Ende (14a) der zweiten hochtemperatursupraleitenden Komponente (14) im wesentlichen diagonal ist.

24. Verfahren nach Anspruch 15, bei dem das erste Ende (12a) der ersten hochtemperatursupraleitenden Komponente (12) im wesentlichen umgekehrt dreieckig ist.

25. Verfahren nach Anspruch 24, bei dem das erste Ende (14a) der zweiten hochtemperatursupraleitenden Komponente (14) im wesentlichen umgekehrt dreieckig ist.

26. Verfahren nach Anspruch 15, des weiteren mit dem Schritt des Anbringens von zumindest einer Schutzschicht (20) auf die erste und die zweite hochtemperatursupraleitenden Komponente (12, 14).

27. Verfahren nach Anspruch 26, bei dem die Schutzschicht (12) mit Hilfe einer zweiten Lötschicht (18) angebracht ist.

28. Verfahren nach Anspruch 27, bei dem die zweite Lötschicht (18) eine geringere Schmelztemperatur als die erste Lötschicht (16) besitzt.

## Revendications

1. Câble supraconducteur (31), comportant :
a) une âme (36),
b) et un premier fil supraconducteur à haute température (34, 48), enroulé en hélice autour de l'âme (36), lequel premier fil supraconducteur à haute température (34, 48) comporte :
i) un premier composant supraconducteur à haute température (12) présentant une première extrémité (12a) et une deuxième extrémité,
ii) une couche d'un premier matériau de soudure (16), une partie de cette couche de soudure (16) étant attachée à au moins une partie de la première extrémité (12a) du premier composant supraconducteur à haute température (12),
iii) et un deuxième composant supraconducteur à haute température (14) présentant une première extrémité (14a) et une deuxième extrémité, au moins une partie de la première extrémité (14a) du deuxième composant supraconducteur à haute température (14) étant attachée à une partie de la couche de soudure (16) ;
dans lequel câble
- la partie du premier composant supraconducteur à haute température (12) attachée au matériau de soudure (16) et la partie du deuxième composant supraconducteur à haute température (14) attachée au matériau de soudure (16) constitue un segment à chevauchement (15),
- la forme de la première extrémité (12a, 14a) d'au moins l'un des premier et deuxième composants supraconducteurs à haute température (12, 14) est adaptée pour minimiser la concentration de contraintes dans ledit fil (34, 48),
- et sur une section du premier fil supraconducteur (34, 48) au moins 100 fois plus longue que le segment à chevauchement, le courant critique vaut au moins 80 % du plus faible des courants critiques dans les premier et deuxième composants supraconducteurs à haute température (12, 14), ces courants critiques étant déterminés avec le critère de 1 µV/cm.

2. Câble conforme à la revendication 1, qui comporte en outre au moins une couche protectrice (20) attachée aux premières extrémités (12a, 14a) des premier et deuxième composants supraconducteurs à haute température (12, 14).

3. Câble conforme à la revendication 1, qui comporte en outre un deuxième fil supraconducteur à haute température (35), enroulé en hélice autour d'une âme (38), les premier et deuxième fils supraconducteurs à haute température (34, 35) présentant des hélicités opposées.

4. Câble conforme à la revendication 1, dans lequel le premier fil supraconducteur à haute température (34, 48) est enroulé en hélice autour de l'âme (36) avec un pas constant.

5. Câble conforme à la revendication 1, dans lequel la première extrémité (12a) du premier composant supraconducteur à haute température (12) est sensiblement triangulaire.

6. Câble conforme à la revendication 5, dans lequel la première extrémité (14a) du deuxième composant supraconducteur à haute température (14) est sensiblement triangulaire.

7. Câble conforme à la revendication 1, dans lequel la première extrémité (12a) du premier composant supraconducteur à haute température (12) est sensiblement coupée en diagonale.

8. Câble conforme à la revendication 7, dans lequel la première extrémité (14a) du deuxième composant supraconducteur à haute température (14) est sensiblement coupée en diagonale.

9. Câble conforme à la revendication 1, dans lequel la première extrémité (12a) du premier composant supraconducteur à haute température (12) a sensiblement la forme d'un triangle à pointe inversée.

10. Câble conforme à la revendication 9, dans lequel la première extrémité (14a) du deuxième composant supraconducteur à haute température (14) a sensiblement la forme d'un triangle à pointe inversée.

11. Câble conforme à la revendication 1, dans lequel, dans le segment à chevauchement, le courant critique vaut au moins 85 % du plus faible des courants critiques dans les premier et deuxième composants supraconducteurs à haute température (12, 14).

12. Câble conforme à la revendication 11, dans lequel, dans le segment à chevauchement, le courant critique vaut au moins 90 % du plus faible des courants critiques dans les premier et deuxième composants supraconducteurs à haute température (12, 14).

13. Câble conforme à la revendication 11, dans lequel, dans le segment à chevauchement, le courant critique vaut au moins 95 % du plus faible des courants critiques dans les premier et deuxième composants supraconducteurs à haute température (12, 14).

14. Câble conforme à la revendication 11, dans lequel, dans le segment à chevauchement, le courant critique vaut au moins 99 % du plus faible des courants critiques dans les premier et deuxième composants supraconducteurs à haute température (12, 14).

15. Procédé permettant de minimiser la concentration de contraintes dans un premier fil supraconducteur à haute température (34, 48) d'un câble supraconducteur (31) objet des revendications précédentes, ledit premier fil supraconducteur à haute température (34, 48) comportant au moins deux composants supraconducteurs à haute température (12, 14), lequel procédé comporte :
- le fait de prendre un premier composant supraconducteur à haute température (12) présentant une première extrémité (12a) et une deuxième extrémité,
- le fait de prendre un deuxième composant supraconducteur à haute température (14) présentant une première extrémité (14a) et une deuxième extrémité,
- le fait d'appliquer une couche de soudure (16) sur les premier et deuxième composants supraconducteurs à haute température (12, 14), pour former une jonction (10),
- et le fait d'enrouler en hélice, sur une âme (36), les premier et deuxième composants supraconducteurs (12, 14) ainsi attachés, formant un premier fil supraconducteur à haute température (34, 48), pour en faire ledit câble supraconducteur (31);
la partie du premier composant supraconducteur à haute température (12) attachée au matériau de soudure (16) et la partie du deuxième composant supraconducteur à haute température (14) attachée au matériau de soudure (16) constituant un segment à chevauchement (15) où le courant critique vaut au moins 80 % du plus faible des courants critiques dans les premier et deuxième composants supraconducteurs à haute température (12, 14), le courant critique dans le segment à chevauchement étant mesuré sur une longueur de fil au moins 100 fois plus longue que le segment à chevauchement, et ces courants critiques étant déterminés avec le critère de 1 µV/cm.

16. Procédé conforme à la revendication 15, dans lequel, dans le segment à chevauchement, le courant critique vaut au moins 85 % du plus faible des courants critiques dans les premier et deuxième composants supraconducteurs à haute température (12, 14).

17. Procédé conforme à la revendication 15, dans lequel, dans le segment à chevauchement, le courant critique vaut au moins 90 % du plus faible des courants critiques dans les premier et deuxième composants supraconducteurs à haute température (12, 14).

18. Procédé conforme à la revendication 15, dans lequel, dans le segment à chevauchement, le courant critique vaut au moins 95 % du plus faible des courants critiques dans les premier et deuxième composants supraconducteurs à haute température (12, 14).

19. Procédé conforme à la revendication 15, dans lequel, dans le segment à chevauchement, le courant critique vaut au moins 99 % du plus faible des courants critiques dans les premier et deuxième composants supraconducteurs à haute température (12, 14).

20. Procédé conforme à la revendication 15, dans lequel la première extrémité (12a) du premier composant supraconducteur à haute température (12) est sensiblement triangulaire.

21. Procédé conforme à la revendication 20, dans lequel la première extrémité (14a) du deuxième composant supraconducteur à haute température (14) est sensiblement triangulaire.

22. Procédé conforme à la revendication 15, dans lequel la première extrémité (12a) du premier composant supraconducteur à haute température (12) est sensiblement coupée en diagonale.

23. Procédé conforme à la revendication 22, dans lequel la première extrémité (14a) du deuxième composant supraconducteur à haute température (14) est sensiblement coupée en diagonale.

24. Procédé conforme à la revendication 15, dans lequel la première extrémité (12a) du premier composant supraconducteur à haute température (12) a sensiblement la forme d'un triangle à pointe inversée.

25. Procédé conforme à la revendication 24, dans lequel la première extrémité (14a) du deuxième composant supraconducteur à haute température (14) a sensiblement la forme d'un triangle à pointe inversée.

26. Procédé conforme à la revendication 15, qui comporte en outre le fait d'appliquer au moins une couche protectrice (20) sur les premier et deuxième composants supraconducteurs à haute température (12, 14).

27. Procédé conforme à la revendication 26, dans lequel la couche protectrice (20) est attachée au moyen d'une deuxième couche de soudure (18).

28. Procédé conforme à la revendication 27, dans lequel la soudure de la deuxième couche (18) fond à plus basse température que la soudure de la première couche (16).
